# EUROPEAN PATENT SPECIFICATION

(11) **EP 0 879 981 B1**
(45) Date of publication and mention of the grant of the patent: **12.03.2003**
(21) Application number: 98107331.5
(22) Date of filing: 22.04.1998
(51) Int. Cl.: F16L 25/00, F16L 33/26

(54) **Improved method of manufacturing a rotary coupling for the hermetic connection of corrugated flexible metal hoses**
Verbesserte Methode zur Herstellung einer Drehkupplung zur hermetischen Verbindung von umfangsgerippten flexiblen Metallschläuchen
Procédé de fabrication d'un accouplement rotatif amélioré pour la connexion hermétique de tuyaux ondulés flexibles métalliques

(30) Priority: 20.05.1997 IT TO970104
(43) Date of publication of application: 25.11.1998
(73) Proprietor: Castelli, Sergio, I-10146 Torino (IT)
(72) Inventor: Castelli, Sergio, I-10146 Torino (IT)
(74) Representative: Modiano, Guido, Dr.-Ing.

(56) References cited:
- EP-A- 0 557 594
- CH-A- 680 748
- DE-A- 4 421 956

## Description

The present invention relates to an improved method of manufacturing a rotary coupling for the hermetic connection of corrugated flexible metal hoses.

When connecting hoses, it is often necessary to have a male or female threaded end coupling which can rotate with respect to the hose so that it can be screwed into a female threaded union or respectively onto a male threaded stem without twisting the hose.

A rotary coupling is already known in which the rotary coupling between a corrugated hose and the coupling is provided by a shoulder of the hose which cooperates with a protruding raised portion of the coupling protruding radially towards the hose and in which the hose shoulder is formed by compressing one or more end corrugations of the hose.

This conventional coupling is undoubtedly simple but is scarcely effective due to the small annular contact surface between the hose and the coupling as a consequence of the fact that on the one hand the increase in the diameter of the corrugations caused by the compression is very limited and that on the other hand the protruding raised portion of the coupling cannot protrude radially beyond the maximum diameter of the hose in order to avoid interference therewith when said coupling is fitted on said hose. The limited contact surface between the hose and the coupling produces a high concentration of stresses during tightening, with a consequent deformation of the shoulder of the hose and/or of the raised portion of the coupling, so that it becomes indispensable to limit the tightening, to the detriment of the tightness of the coupling.

EP-A-557 594 discloses a rotary coupling as defined in the preamble of claim 1.

The aim of the present invention is substantially to eliminate this drawback, which is particularly severe when the hose and the coupling are used to convey fluids in connections between the distribution system and home users.

Within the scope of this aim, an important particular object of the invention is to provide a rotary coupling of the specified type in which structural simplicity is combined with high functionality arising from a substantial increase in the surfaces for mutual contact and mating between the hose and the coupling, to the benefit of a significant improvement in tightness, particularly in the pressure tightness of the coupling.

According to the present invention, this aim, this object and others which will become apparent from the following detailed description are achieved with a rotary coupling having the specific features set forth in the appended claims.

The invention is based essentially on the innovative concept of providing a rotary coupling in which a shallower end hose portion is provided which is adjacent to the shoulder generated by one or more compressed corrugations and is obtained by radial and partial rolling of the corrugations and in which a radial raised portion, provided on an extension of the coupling, is arranged substantially in contact with said shallower portion of the hose through the deformation of said extension of the coupling, which is achieved by pressing.

With this configuration, the increase in radius of the shoulder caused by compression of the corrugations is added to the reduction of the radius of the shallower region of the hose and the mutual contact surface between the hose and the coupling is considerably increased correspondingly as a whole.

Further characteristics and advantages of the improved coupling according to the present invention will become apparent from the following detailed description and with reference to the accompanying drawings, wherein:
Figure 1 is a view of the coupling according to the invention shown with one half thereof in sectional view.
Figure 2 is a partial sectional view of a detail of the body of the coupling before its coupling to the end of the corrugated hose; and
Figure 3 is a detail view of the end region of the corrugated hose that is associated with the coupling of Figure 2.

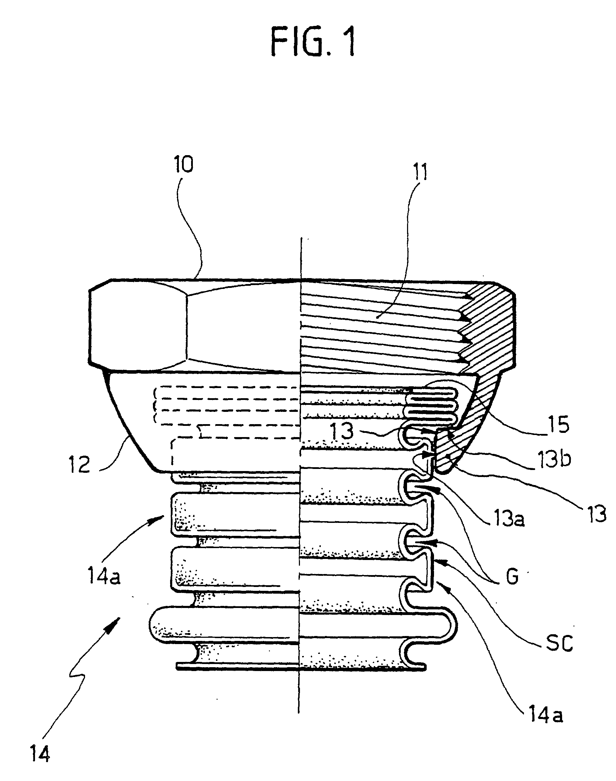

In Figure 1, the reference numeral 10 designates the body of the coupling, which has a hexagonal outer profile for the engagement of a tightening key and a female threaded seat 11 which is suitable to couple to a corresponding male threaded tang or viceversa. The body 10 protrudes so as to form an extension 12, inside which a protruding annular raised portion 13 is provided which protrudes radially towards the corrugated hose 14. Said hose has a shoulder 15 formed by compressing one or more corrugations of the hose. The inside diameter of the extension 12 is chosen so that the shoulder 15 can be inserted in the coupling by passing beyond the protruding annular raised portion 13.

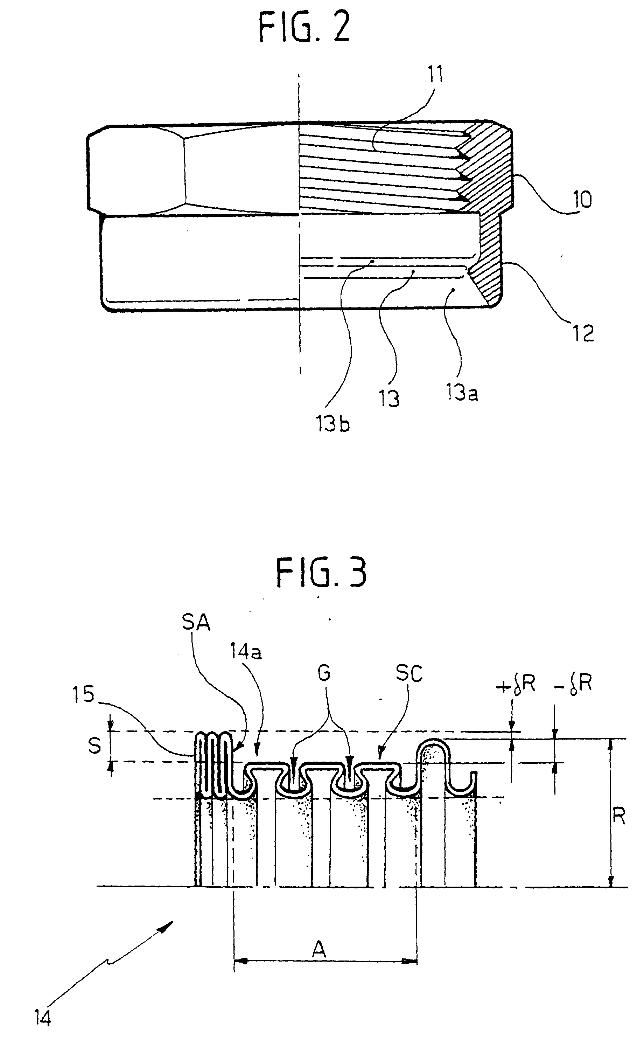

According to the present invention, the end part of the hose 14, which is adjacent to the shoulder 15, has a shallower portion 14a obtained by partial radial rolling of the corrugations; the radial width reduction is substantially equal to the radial extension of half a corrugation, so that in the shallower region 14a the hose 14 has (Figure 3) a plurality of grooves G which have an open annular cross-section and are interleaved by cylindrical segments SC. After the insertion of the end part of the hose 14 in the coupling, the extension 12 of the coupling is deformed by pressing so as to arrange the protruding annular raised portion 13 substantially in contact -- except for a minimal gap required for the sliding and the rotation of the coupling -- with the shallower region 14a of the hose 14. In this manner, when the operation is complete, the coupling assumes the configuration shown in Figure 1. Such configuration is characterized in that the body 10 of the coupling has an inside diameter which is 8-15% greater than the diameter of the shoulder 15 of the hose 14 and a tapering extension 12 which ends proximate to the shallower region 14a of the hose 14 and has a cylindrical surface 13a which faces said shallower region and a step 13b facing the shoulder 15; the cylindrical surface 13a and the step 13b are formed on the protruding annular raised portion 13. The step 13b receives the shoulder 15 of the hose and both said step and said shoulder have an annular mutual engagement surface SA whose thickness S is equal to the increase +δR in the radius of the hose 14 produced by the compression of the corrugations that form the shoulder 15 plus the reduction -δR in the radius of the hose 14 in the shallower region 14a (Figure 3). The figure clearly shows that the annular surface SA for the mutual resting of the shoulder 15 and the step 13b is thus increased by more than 50%, fully achieving the stated aim.

Advantageously, according to the present invention, the axial extension A of the shallower region 14a of the hose 14 is chosen so as to allow an axial sliding of the coupling 10 on the hose 14 which is sufficient to ensure easy expulsion of any sealing gaskets placed over the shoulder 15; A is typically 1.15-1.25R.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for obtaining a rotary coupling for the hermetic connection of corrugated flexible metal hoses, comprising a body (10) for connection to a protruding raised portion (13) whereon there contrasts a shoulder (15) which is formed by the compression of one or more end corrugations of a corrugated hose (14), a shallower end portion (14a) of the hose being arranged adjacent to said shoulder (15), said protruding raised portion (13) being supported by an extension (12) of the body (10) of the coupling, said extension, after being deformed by pressing, placing the protruding raised portion substantially in contact with said shallower end portion (14a) of the hose in order to increase the surface (SA) for mutual engagement of said shoulder (15) and said protruding raised portion (13), **characterized in that** said shallower end portion (14a) is obtained by partial radial rolling of the corrugations of said hose.

2. The method of claim 1, **characterized in that** the body (10) of the coupling has an inside diameter which is 8-15% greater than the diameter of the shoulder (15) of the hose (14) and a tapering extension (12) which ends at the shallower end portion (14a) of the hose (14) and is provided with a cylindrical surface (13a) which faces said shallower end portion (14a) and a step (13b) which faces the shoulder (15) of the hose; said cylindrical surface (13a) and said step (13b) being formed on the protruding annular raised portion (13) of said extension (12).

3. The method of claim 2, **characterized in that** both said step (13b) of the extension (12) and said shoulder (15) of the hose (14) have an annular surface (SA) for mutual engagement whose thickness (S) is equal to the increase (+δR) in the radius (R) of the hose (14), produced by the compression of the corrugations that form the shoulder (15), plus the reduction (-δR) in the radius of the hose in said shallower end portion (14a).

4. The method of claim 1, **characterized in that** the axial extension (A) of the shallower end portion (14a) of the hose (14) is between 1.15 and 1.25 R, where R is the radius of said hose (14).

## Patentansprüche

1. Ein Verfahren zum Erhalten einer Drehkupplung für die hermetische Verbindung von gewellten, flexiblen Metallschläuchen, umfassend einen Körper (10) zur Verbindung mit einem hervorstehenden, erhöhten Abschnitt (13), dem eine durch das Zusammendrücken von einer oder mehreren Endwellen eines gewellten Schlauches (14) gebildete Schulter (15) gegenübertritt, einen flacheren, benachbart zu der Schulter (15) angeordneten Endabschnitt (14a) des Schlauches, wobei der hervorstehende, erhöhte Abschnitt (13) durch eine Verlängerung (12) des Körpers (10) der Kupplung gestützt ist, wobei die Verlängerung nach einer Verformung durch Drücken den hervorstehenden, erhöhten Abschnitt im Wesentlichen in Kontakt mit dem flacheren Endabschnitt (14a) des Schlauches bringt, um die Oberfläche (SA) für ein gegenseitiges Eingreifen der Schulter (15) und des hervorstehenden, erhöhten Abschnitts (13) zu vergrößern, **dadurch gekennzeichnet, dass** der flachere Endabschnitt (14a) durch teilweises radiales Walzen der Wellen des Schlauches erhalten wird.

2. Verfahren nach Anspruch 1, **dadurch gekennzeichnet, dass** der Körper (10) der Kupplung einen Innendurchmesser, der um 8 - 15% größer als der Durchmesser der Schulter (15) des Schlauches (14) ist, und eine verjüngte Verlängerung (12) aufweist, die an dem flacheren Endabschnitt (14a) des Schlauches (14) endet und mit einer zylindrischen Oberfläche (13a), die dem flacheren Endabschnitt (14a) gegenüberliegt, und mit einer Stufe (13b) versehen ist, die der Schulter (15) des Schlauches gegenüberliegt, wobei die zylindrische Oberfläche (13a) und die Stufe (13b) an dem hervorstehenden, ringförmig erhöhten Abschnitt (13) der Verlängerung (12) gebildet sind.

3. Ein Verfahren nach Anspruch 2, **dadurch gekennzeichnet, dass** sowohl die Stufe (13b) der Verlängerung (12) als auch die Schulter (15) des Schlauches (14) eine ringförmige Oberfläche (SA) zum gegenseitigen Eingreifen aufweisen, deren Dicke (S) gleich dem durch das Zusammendrücken der die Schulter (15) formenden Wellen gebildeten Anstieg (+δR) des Radius (R) des Schlauches (14) und der Reduzierung (-δR) des Radius (R) des Schlauches an dem flacheren Endabschnitt (14a) ist.

4. Verfahren nach Anspruch 1, **dadurch gekennzeichnet, dass** die axiale Ausdehnung (A) des flacheren Endabschnittes (14a) des Schlauches (14) zwischen 1,15 und 1,25-R beträgt, wobei R der Radius des Schlauches (14) ist.

## Revendications

1. Procédé d'obtention d'un accouplement rotatif pour la connexion hermétique de tuyaux ondulés flexibles métalliques, comprenant un corps (10) pour la connexion à une partie en saillie et en relief (13) sur laquelle il contraste un épaulement (15) qui est formé par la compression d'une ou de plusieurs ondulations d'extrémité d'un tuyau ondulé (14), une partie terminale moins profonde (14a) du tuyau étant agencée de sorte à être adjacente audit épaulement (15), ladite partie en saillie et en relief (13) s'appuyant sur un prolongement (12) du corps (10) de l'accouplement, ledit prolongement, après avoir été déformé par pression, mettant la partie en saillie et en relief sensiblement en contact avec ladite partie terminale moins profonde (14a) du tuyau de sorte à accroître la surface (SA) servant à la mise en contact mutuelle entre ledit épaulement (15) et ladite partie en saillie et en relief (13), **caractérisé en ce que** ladite partie terminale moins profonde (14a) est obtenue par laminage radial partiel des ondulations dudit tuyau.

2. Procédé selon la revendication 1, **caractérisé en ce que** le corps (10) de l'accouplement présente un diamètre intérieur qui est de 8 à 15 % plus important que le diamètre de l'épaulement (15) du tuyau (14) et un prolongement conique (12) qui se termine au niveau de la partie terminale moins profonde (14a) du tuyau (14) et est muni d'une surface cylindrique (13a) qui est tournée vers ladite partie terminale moins profonde (14a) et d'une butée (13b) qui est tournée vers l'épaulement (15) du tuyau ; ladite surface cylindrique (13a) et ladite butée (13b) étant formées sur la partie annulaire en saillie et en relief (13) dudit prolongement (12).

3. Procédé selon la revendication 2, **caractérisé en ce que** ladite butée (13b) du prolongement (12) et ledit épaulement (15) du tuyau (14) présentent une surface annulaire (SA) pour mise en contact mutuelle dont l'épaisseur (S) est égale à l'augmentation (+δR) du rayon (R) du tuyau (14), produite par la compression des ondulations formant l'épaulement (15), plus la réduction (-δR) du rayon du tuyau dans ladite partie terminale moins profonde (14a).

4. Procédé selon la revendication 1, **caractérisé en ce que** le prolongement axial (A) de la partie terminale moins profonde (14a) du tuyau (14) est compris entre 1,15 et 1,25 R, où R est le rayon dudit tuyau (14).
